# EUROPEAN PATENT SPECIFICATION

(11) **EP 4 001 777 B1**
(45) Date of publication and mention of the grant of the patent: **01.01.2025**
(21) Application number: 21209373.6
(22) Date of filing: 19.11.2021
(51) Int. Cl.: F24D 3/10, B01D 36/00, B01D 35/153, B01D 35/06, B01D 29/23, B03C 1/00, F24D 19/00, B03C 1/033, B03C 1/28, B03C 1/30

(54) **HYDRAULIC SEPARATOR FOR A THERMAL SYSTEM**
HYDRAULISCHE WEICHE FÜR EIN THERMISCHES SYSTEM
SÉPARATEUR HYDRAULIQUE POUR UN SYSTÈME THERMIQUE

(30) Priority: 20.11.2020 IT 202000027915
(43) Date of publication of application: 25.05.2022
(73) Proprietor: R.B.M. S.p.A., 25060 Polaveno (BS) (IT)
(72) Inventor: BOSSINI, Guido, 25075 NAVE (BS) (IT)
(74) Representative: Studio Torta S.p.A.

(56) References cited:
- DE-U1- 20 304 324
- DE-U1- 202005 005 008
- DE-U1- 8 806 448
- IT-A1- TV20 090 197

## Description

### CROSS-REFERENCE TO RELATED APPLICATIONS

This patent application claims priority from Italian patent application no. 102020000027915 filed on November 20, 2020.

### TECHNICAL FIELD

The invention relates to a separator filter for a thermal system, in particular a heating and/or cooling system.

### PRIOR ART

In thermal systems comprising a primary circuit (for the generation of thermal power) and a secondary circuit (for the distribution of thermal power to utilities), each provided with one or more pumps, there can be situations in which the pumps interact determining anomalous changes in the flow rates and in the heads of the circuits. In this type of systems, a hydraulic separator is used, which is interposed between the primary circuit and the secondary circuit, in order to create a common zero-head zone between the two circuits, thus making them - at least theoretically - hydraulically independent. In this way and under ideal conditions, regardless of the number of active pumps and of the delivered flow rate, the pressure in the separator always is the same as the pre-loading pressure of the system and the flow rate circulating in each circuit exclusively depends on the pump of the circuit itself, without mutual influences between the pumps. As a consequence, in case the pump of a circuit is active and the one of the other circuit is not active, the flow in the active circuit does not induce a flow in the inactive circuit.

Known hydraulic separators generally comprise a hollow body, which, in use, is arranged vertically and is provided with four sleeves, which are arranged two by two on opposite sides of the body. Two sleeves are used for the connection to a delivery line and to a return line of the primary circuit and the other two are used for the connection to a delivery line and to a return line of the secondary circuit. Between the two pair of sleeves, namely along the a vertical middle plane of the body, there can be a partition with the function of supporting the separation of the suspended particles as well as the build-up thereof on the bottom of the body. A purge valve, which is arranged on the bottom of the body, allows impurities to be periodically purged.

Known separators suffer from some drawbacks.

Known separators cannot be inspected. Despite the purge valve, inside the body there can be a build-up of deposits that are such as to determine, over time, a significant load loss, which can jeopardize the correct operation of the separator. In this case, the separation between the primary circuit and the secondary circuit is not perfect and, therefore, there can be influences between the flow rates delivered by the pumps in the respective circuits. In particular, there can be parasite flows within a circuit even if the pump of said circuit is inactive, with a consequent alteration of the temperature available to the utilities.

Another problem, which especially arises under conditions of partial loads (small flow rates) is linked to the parasite current generated along the walls of the separator between the delivery and the return of the primary and secondary circuits, which are enabled by the different temperature of the fluids (stratification). Because of these parasite currents, a precise control of the temperature available to the utilities becomes difficult.

IT TV20090197 A1 discloses a separator having the features of the preamble of claim 1.

### SUBJECT-MATTER OF THE INVENTION

The object of the invention is to provide an improved separator, which solves the aforesaid problems affecting known separators.

In order to do so, the invention provides a separator according to claim 1.

According to the invention, the creation of a node, in which there is a direct connection between the input lines of the primary circuit and of the secondary circuit, and the simultaneous use of a filter inside the separator, downstream of which there is the connection between the aforesaid node and the return line of the primary circuit, ensure a zero load loss between the aforesaid lines. Therefore, the separator always is in ideal operating conditions and ensures a perfect independence between the circuits in any condition.

The invention also relates to a thermal system according to claim 14.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
figure 1 is a front elevation view of a hydraulic separator according to the invention;
figure 2 is a plan section view of the separator of figure 3;
figure 3 is a cross section of the separator according to line III-III in figure 2;
figure 4 is an exploded perspective view of the separator of figure 1;
figure 5 is a diagram of a thermal system using the separator of figure 1;
figures 6, 7, 8, 9 and 10 are schematic cross sections of the separator of figure 1 with indication of the flows in different operating conditions.

### PREFERRED EMBODIMENT OF THE INVENTION

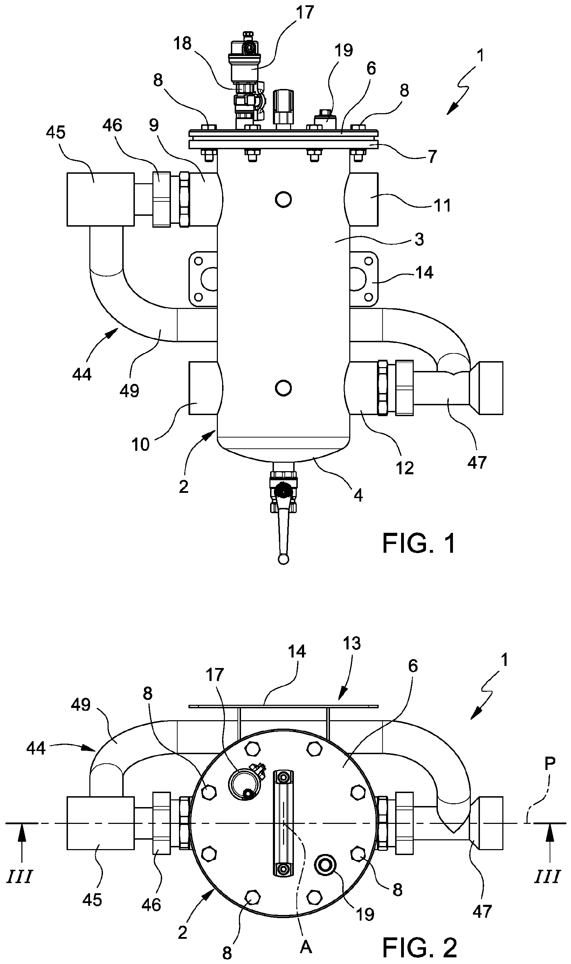

With reference to figures 1 to 3, number 1 indicates, as a whole, a hydraulic separator according to the invention.

The separator 1 comprises a hollow body 2 with a vertical axis A having a substantially cylindrical lateral wall 3 and a bottom wall 4, which preferably is bulged downwards.

The body 2 delimits an inner chamber 5 and is closed at the top by a removable cover 6, which is fixed to an annular flange 7 radially projecting from an upper end of the lateral wall 3 by means of a plurality of bolts 8.

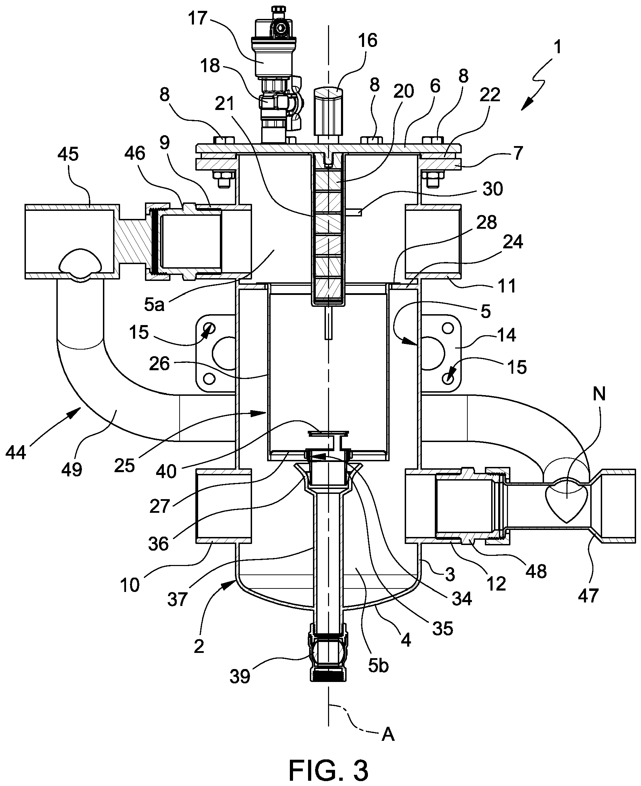

The body 2 comprises four threaded tubular sleeves 9, 10, 11, 12, which define respective connection openings communicating with the chamber 5 and are arranged two (9, 10) on one side of the lateral wall 3 and two (11, 12) on the opposite side (figures 1 and 3).

The sleeves 9, 11 are arranged above the flange 7 and preferably are coaxial and in a diametrically opposite position relative to one another; the sleeves 10, 12 are arranged close to the bottom wall 4 and preferably are coaxial and in a diametrically opposite position relative to one another.

In the example shown herein, the axes of the sleeves 9, 10, 11, 12 are arranged on a common plane P (figure 2) going through the axis A.

The body 2 is finally provided with a bracket 13, which projects from the lateral wall 3 and ends with a plate 14, conveniently parallel to the plane P and elongated in a horizontal direction, which is provided with holes 15 for the fixing to a wall or another support structure.

The cover 6, which is provided with an upper handle 16 to help it be moved, carries an air purge valve 17, which is connected to the chamber 5 by means of a ball shut-off valve 18. The cover 6 is further provided with a joint 19 for the possible introduction of substances into the carrier fluid.

The cover 6 finally carries, on the inside of the chamber 5, a magnet 20, which projects from the cover itself along the axis A and is coated with a protection sheath 21, which can be removed in order to facilitate the cleaning of the magnet.

The cover 6 is mounted on the flange 7 of the body 2 with the interposition of a gasket 22.

The lateral wall 3 defines, immediately under the sleeves 9, 11, an annular inner flange 24, which supports a filter 25.

The filter 25, which is shaped like a cylindrical basket, comprises a lateral wall 26 made of a metal net with meshes with dimensions in the range of 100 um, a bottom wall 27 and an upper annular flange 28, which is designed to rest against the inner flange 24 of the wall 3 of the body 2.

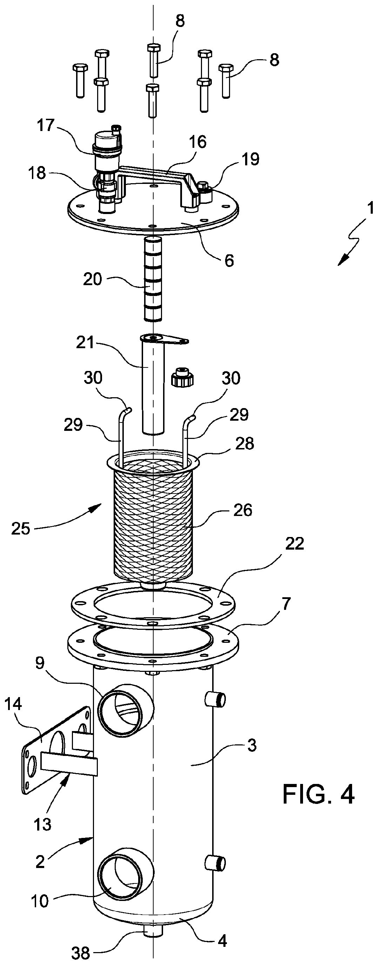

The filter 25 is provided with a pair of bars 29 (figure 4), which are fixed on the inside of the lateral wall 26 in a diametrically opposite position relative to one another. The bars 29 axially project upwards and end with respective ends 30 bent in the form of an L, which can be grabbed in order to remove and install the filter 25.

The bottom wall 27 of the filter 25 has a central through hole 34 (figure 3) housing, in a sliding manner, a tubular sleeve 35, which projects downwards and engages a funnel-shaped upper end 36 of an axial duct 37, which leads outwards at the centre of the bottom wall 4; at the lower end 38 of the duct 37 there is housed a ball purge valve 39.

The tubular sleeve 35 is provided, at the top, with a disc shutter 40, which is designed to seal the hole 34 of the bottom wall 27 when the filter 25 is removed from the body 2. The sleeve 35 and the shutter 40 define a normally open valve, which is designed to automatically close when the filter 25 is removed.

The filter 25 divides the inner chamber 5 of the body 2 into an upper filtering zone 5a, which houses the magnet 20, and into a lower hydraulic separation zone 5b. Therefore, the integration of the filter 25 on the inside of the body 2 has the effect of definitely allowing the zone 5b to be free from impurities and of preventing it from determining a pressure drop between the sleeve 10 and the sleeve 12.

The separator 2 finally comprises an interconnection kit 44, which can be connected to the body 2 in a removable manner. The kit comprises a connection 45, which can be connected to the sleeve 9 by means of a first intermediate rotatable dead joint 46, a second connection 47, which can be connected to the sleeve 12 by means of a second intermediate rotatable through joint 48, and a tube 49, which hydraulically connects the first joint 45 and the second joint 47 to one another. Therefore, in use, the sleeve 9 is closed by the intermediate joint 46, which basically constitutes a plug, and the connection of the first joint 45 to the sleeve 9 has a mere mechanical anchoring function, whereas the joint 45 is hydraulically connected to the sleeve 12 by means of the tube 49 and the joint 47, which define a node N of the circuit with zero head, as better described below.

The tube 49 has a double-elbow shape and, in the example shown herein extends behind the body 2 (namely, between the body 2 ad the plate 14 of the bracket 13) . This configuration is suited in case the pipes of the primary circuit come from the side of the sleeves 9, 10 (from the left with reference to figures 2 and 3) and the ones of the secondary circuit come from the side of the sleeves 11, 12 (from the right with reference to figures 2 and 3). However, the joint 45 can be connected to the sleeve 11 and the joint 47 can be connected to the sleeve 10 in case the pipes of the primary circuit come from the right and the ones of the secondary circuit come from the left (always with reference to figures 1 and 3).

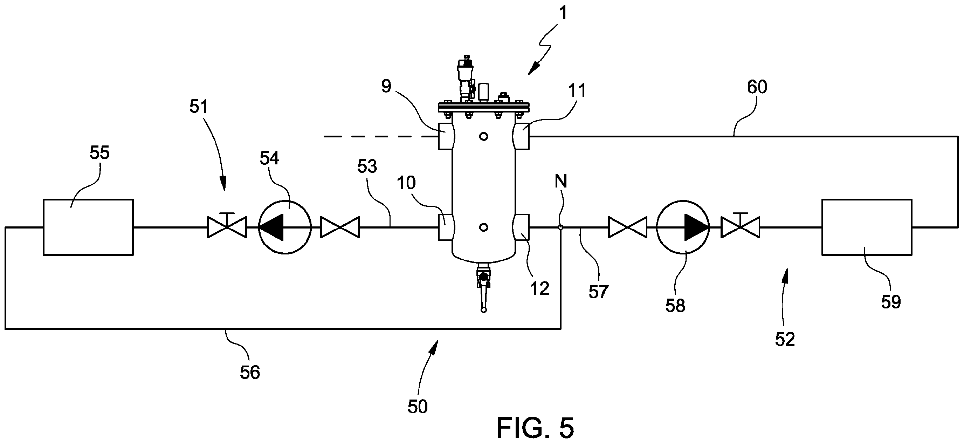

Figure 5 shows the diagram of a thermal system 50 using the separator 1 according to the invention and comprising a primary circuit 51 and a secondary circuit 52. The separator 1 is shown in a schematic fashion and the sole sleeves 9, 10, 11, 12 are indicated, whereas the relative joints, if present, are not indicated.

The primary circuit 51 comprises an input line 53, a pump 54, a generator 55, for example a boiler, and a return line 56, which is mechanically connected to the sleeve 9, but is hydraulically connected, as discussed above, to the sleeve 12 by means of the tube 49. The sleeve 10 defines (or is connected to) a connection for the input line 53.

The secondary circuit comprises an input line 57 connected to the sleeve 12 of the separator 1, a pump 58, at least one utility 59 and a return line 60 connected to the sleeve 11 of the separator 1. The sleeve 11 defines (or is connected to) a connection for the return line 60.

The separator 1 works as follows.

The return flow rate coming from the utility flows into the body 2 of the separator 1 through the sleeve 11. Since the cross section of the body 2 is much larger than the one of the line 52, the flow undergoes a sudden speed reduction, with a consequent reduction in the particle dragging speed.

The magnet 20, which is arranged in the upper part of the body, holds back the impurities having magnetic features (ferrous residues, metal sludge).

The remaining particles (mud, sand) are held back by the filter 25: the heavier ones precipitate towards the bottom wall 27 due to gravity, the lighter ones are held back on the inside through direct filtration.

The return line 56 of the primary circuit 51 and the input line 58 of the secondary circuit 52 are directly connected to one another in the node N (thanks to the tube 49). The node N, in turn, is connected to the input line 53 of the primary circuit 51 through the zone 5b, which, since it is free from impurities because of what mentioned above, cannot introduce any load loss regardless of the cleaning condition of the filter.

Furthermore, since the flow flowing out of the primary circuit is directly fed to the inlet of the secondary circuit without having to go through the chamber 5 of the separator 1, stratification phenomena and parasite currents along the walls of the body 2 are avoided.

This ensures that the hydraulic separation between the primary circuit 51 and the secondary circuit 52 is ideal, as evidently shown by the diagrams of figures 5-9. Therefore, whatever the flow rate in the primary and secondary circuits, there is a total absence of parasite flows and of mutual influence between the pumps of the aforesaid circuits and there is no alteration of the hydraulic balances between the circuits as well as no alteration of the flow temperature available to the utilities.

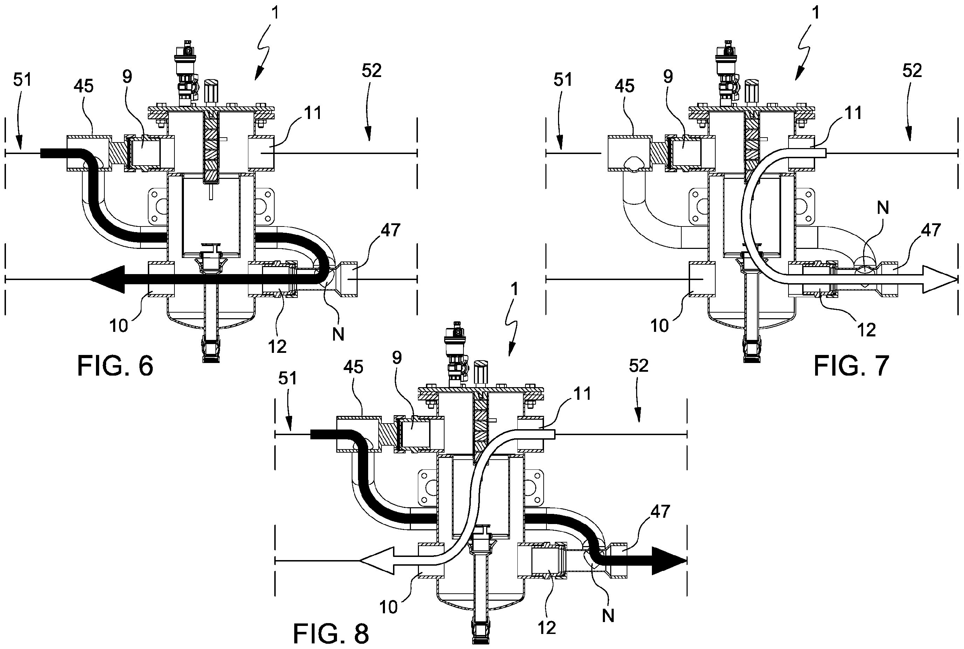

Figures 6 to 10 schematically show the flows in the separator in different possible operating conditions of the system.

Figure 6 shows the case in which the sole primary circuit is active; in this case, there is no parasite flow in the secondary circuit.

Figure 7 shows the case in which the sole secondary circuit is active; in this case, the separator 1 only fulfils the task of filtration of the return flow coming from the secondary circuit.

Figure 8 shows the behaviour in case both the primary circuit and the secondary circuit are active and the flow rate of the primary circuit is the same as the flow rate of the secondary circuit; in this case, the separator 1 fulfils the task of filtration of the return flow and of direct connection between the output of the primary circuit and the input of the secondary circuit. Since there is no intersection between the flows on the inside of the body 2 of the separator, there are no parasite currents supported by the stratifying action of conventional separators. For this reason, the separator according to the invention can be used both for heating and for cooling purposes, with no need to change the connections of the pipes.

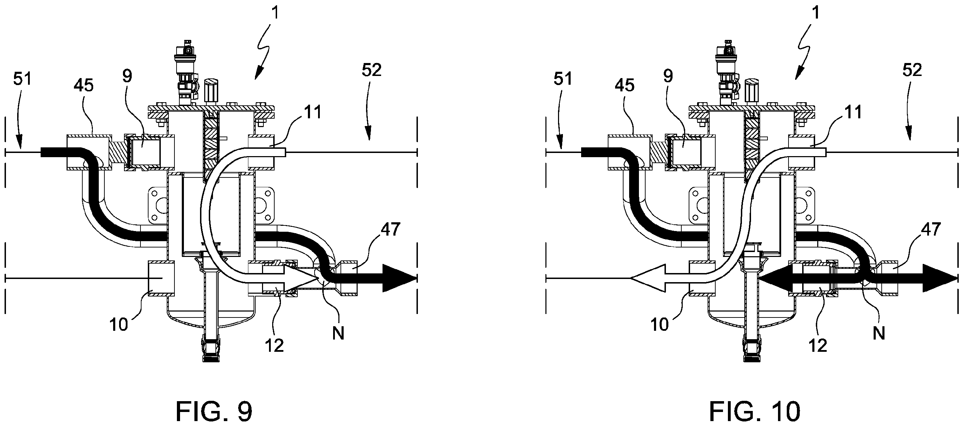

Figure 9 shows the case in which the secondary circuit 52 requires a greater flow rate compared to the one provided by the primary circuit 51. In this case, again, the separator fulfils the task of hydraulic separation between the circuits, ensuring the magnetic filtration of the entire flow rate coming from the secondary circuit.

Finally, figure 10 shows the opposite case in which the secondary circuit 52 requires a smaller flow rate compared to the one provided by the primary circuit 51. The excess flow rate of the primary circuit is recirculated through the separator 1, which also carries out the magnetic filtration of the entire flow rate coming from the secondary circuit.

The use of the tube 49 allows the physical connection of the delivery and return lines of the primary circuit to be carried out on the same side of the separator 1, with evident advantages in terms of assembly easiness. Furthermore, the physical connections are identical to those of a conventional separator, which makes it easier for them to be assembled by plumbers who are used to using conventional separators.

Finally, the separator described above can clearly be subjected to changes and variants, which do not go beyond the scope of protection set forth in the appended claims.

## Claims

1. Hydraulic separator for a thermal system (50) provided with a primary circuit (51) and a secondary circuit (52), including a body (2) with a vertical axis (A), defining an inner chamber (5) and equipped with a first connection (45) for connecting to a return line (56) of the primary circuit (51), a second connection for connecting to an input line of the primary circuit (51), a third connection for connecting to a return line (60) of the secondary circuit (52) and a fourth connection (47) for connecting to an input line (58) of the secondary circuit (52), and a filter (25) housed in the said inner chamber (5) and interposed between a first zone (5a) of the inner chamber (5) communicating with the third connection (11) and a second zone (5b) of the inner chamber (5) communicating with the second and fourth connection (10, 12),
**characterized in that** the first connection (45) and the fourth connection (47) are connected to each other through a node (N) outside said inner chamber (5).

2. Separator as claimed in claim 1, wherein the body (2) includes a first sleeve (9), a second sleeve (10), a third sleeve (11) and a fourth sleeve (12) arranged two by two (9, 11) (10), 12) at opposite sides of the body, the first and third sleeve (9, 11) communicating with the first zone (5a) of the inner chamber (5), the second and fourth sleeve (10, 12) communicating with the second zone (5b) of the inner chamber (5).

3. Separator as claimed in claim 2, wherein the first sleeve (9) is closed, and the first connection (45) is coaxial and mechanically connected to the first sleeve (9).

4. Separator as claimed in claim 3, wherein the first sleeve (9) is closed by a blind rotatable joint (46) to which the first connection (45) is mechanically connected.

5. Separator as claimed in any of claims 2 to 4, wherein the fourth connection (47) is coaxial and hydraulically connected to the fourth sleeve (12).

6. Separator as claimed in claim 5, wherein the fourth connection (47) is connected to the fourth sleeve (12) by means of a rotatable through joint (12).

7. Separator as claimed in any of the preceding claims, wherein the first connection (45) and the fourth connection (47) are connected by a pipe (49) outside the inner chamber (5) and forming said node (N) with the fourth connection (47) .

8. Separator as claimed in claim 7, wherein the first connection (45), the fourth connection (47) and the tube (49) are integrally joined together.

9. Separator as claimed in any of claims 2 to 8, wherein the second and third sleeve (10, 11) define, or are connected to, the second and third connections respectively.

10. Separator as claimed in any of the preceding claims, wherein the body (2) is closed at the top by a removable cover (6).

11. Separator as claimed in any of the above claims, wherein the filter (25) is a basket-shaped and includes a side wall (26) made of a filtering material.

12. Separator as claimed in claim 11, wherein the filter includes a bottom wall (27) wherein a normally open valve (35) communicating with a purge duct (37) and equipped with a shutter (40) configured to close automatically when the filter (25) is removed from the body (2).

13. Separator as claimed any of the preceding claims, including at least one magnet (20) housed in the first zone (5a) of the inner chamber (5) to intercept magnetic particles suspended in the incoming flow from the third sleeve (11).

14. Thermal system (50) equipped with a primary circuit (51) and a secondary circuit (52) having respective input lines (54, 58) and respective return lines (56, 60), and a hydraulic separator (1) as claimed in any of the above claims and having the first connection (45) connected to the return line (56) of the primary circuit (51), the second connection connected to the input line of the primary circuit (51), the third connection connected to the return line (60) of the secondary circuit (52) and the fourth connection (47) connected to the input line (58) of the secondary circuit (52) .

15. System as claimed in claim 14, wherein the input line (54) of the primary circuit (42) is connected to the input line (58) of the secondary circuit (52) in said node (N) .

## Patentansprüche

1. Hydraulischer Abscheider für ein thermisches System (50), das mit einem Primärkreis (51) und einem Sekundärkreis (52) versehen ist, enthaltend ein Gehäuse (2) mit einer vertikalen Achse (A), das eine innere Kammer (5) definiert und einen ersten Anschluss (45) zum Anschließen an eine Rücklaufleitung (56) des Primärkreises (51), einen zweiten Anschluss zum Anschließen an eine Eingangsleitung des Primärkreises (51), einen dritten Anschluss zum Anschließen an eine Rücklaufleitung (60) des Sekundärkreises (52) und einen vierten Anschluss (47) zum Anschließen an eine Eingangsleitung (58) des Sekundärkreises (52) aufweist, und einen Filter (25), der in der inneren Kammer (5) untergebracht ist und zwischen einem ersten Bereich (5a) der inneren Kammer (5), welcher mit dem dritten Anschluss (11) in Verbindung steht, und einem zweiten Bereich (5b) der inneren Kammer (5), welcher mit dem zweiten und vierten Anschluss (10, 12) in Verbindung steht, eingefügt ist,
**dadurch gekennzeichnet, dass** der erste Anschluss (45) und der vierte Anschluss (47) durch einen Knoten (N) außerhalb der inneren Kammer (5) miteinander verbunden sind.

2. Hydraulischer Abscheider nach Anspruch 1,wobei das Gehäuse (2) eine erste Hülse (9), eine zweite Hülse (10), eine dritte Hülse (11) und eine vierte Hülse (12) enthält, welche paarweise (9, 11) (10), (12) an gegenüberliegenden Seiten des Gehäuses angeordnet sind, wobei die erste und die dritte Hülse (9, 11) mit dem ersten Bereich (5a) der inneren Kammer (5) in Verbindung stehen, wobei die zweite und vierte Hülse (10, 12) mit dem zweiten Bereich (5b) der inneren Kammer (5) in Verbindung stehen.

3. Hydraulischer Abscheider nach Anspruch 2,wobei die erste Hülse (9) geschlossen ist und der erste Anschluss (45) koaxial ist und mechanisch mit der ersten Hülse (9) verbunden ist.

4. Hydraulischer Abscheider nach Anspruch 3, wobei die erste Hülse (9) durch eine blinde drehbare Verbindung (46) geschlossen ist, mit welcher der erste Anschluss (45) mechanisch verbunden ist.

5. Hydraulischer Abscheider nach einem der Ansprüche 2 bis 4, wobei der vierte Anschluss (47) koaxial ist und hydraulisch mit der vierten Hülse (12) verbunden ist.

6. Hydraulischer Abscheider nach Anspruch 5, wobei der vierte Anschluss (47) mit der vierten Hülse (12) mittels einer drehbaren Durchgangsverbindung (12) verbunden ist.

7. Hydraulischer Abscheider nach einem der vorhergehenden Ansprüche, wobei der erste Anschluss (45) und der vierte Anschluss (47) durch eine Rohrleitung (49) verbunden sind, welche außerhalb der inneren Kammer (5) ist und mit dem vierten Anschluss (47) den Knoten (N) bildet.

8. Hydraulischer Abscheider nach Anspruch 7, wobei der ersten Anschluss (45), der vierte Anschluss (47) und das Rohr (49) miteinander fest verbunden sind.

9. Hydraulischer Abscheider nach einem der Ansprüche 2 bis 8, wobei die zweite und dritte Hülse (10, 11) jeweils die zweiten und dritten Anschlüsse definieren oder mit diesen verbunden sind.

10. Hydraulischer Abscheider nach einem der vorhergehenden Ansprüche, wobei das Gehäuse (2) an der Oberseite durch eine entfernbare Abdeckung (6)geschlossen ist.

11. Hydraulischer Abscheider nach einem der vorhergehenden Ansprüche, wobei der Filter (25) ein korbförmiger ist und eine Seitenwand (26) enthält, welche aus einem filternden Material hergestellt ist.

12. Hydraulischer Abscheider nach Anspruch 11, wobei der Filter eine Bodenwand (27) enthält, wobei ein normal offenes Ventil (35), welches mit einem Reinigungskanal (37) in Verbindung steht und einen Verschluss (40) aufweist, dazu eingerichtet, automatisch zu schlie-ßen, wenn der Filter (25) aus dem Gehäuse (2) entfernt wird.

13. Hydraulischer Abscheider nach einem der vorhergehenden Ansprüche, enthaltend zumindest einen Magnet (20), welcher in dem ersten Bereich (5a) der inneren Kammer (5) untergebracht ist, um magnetische Partikel, welche in dem einströmenden Fluss aus der dritten Hülse (11) schweben, abzufangen.

14. Thermisches System (50) aufweisend einen Primärkreis (51) und einen Sekundärkreis (52), welches jeweilige Eingangsleitungen (54, 58) und jeweilige Rücklaufleitungen (56, 60) und einen hydraulischen Abscheider nach einem der oberen Ansprüche hat und welches den ersten Anschluss (45), welcher mit der Rücklaufleitung (56)des Primärkreises (51) verbunden ist, den zweiten Anschluss, welcher mit der Eingangsleitung des Primärkreises (51) verbunden ist, den dritten Anschluss, welcher mit der Rücklaufleitung (60) des Sekundärkreises verbunden ist, und den vierten Anschluss (47), welcher mit der Eingangsleitung (58) des Sekundärkreises (52) verbunden ist, hat.

15. System nach Anspruch 14, wobei die Eingangsleitung (54) des Primärkreises (42) mit der Eingangsleitung (58) des Sekundärkreises (52) im Knoten (N) verbunden ist.

## Revendications

1. Séparateur hydraulique pour un système thermique (50) prévu avec un circuit principal (51) et un circuit secondaire (52), comprenant un corps (2) avec un axe vertical (A), définissant une chambre interne (5) et équipé avec un premier raccordement (45) pour se raccorder à une conduite de retour (56) du circuit principal (51), un deuxième raccordement pour se raccorder à une conduite d'entrée du circuit principal (51), un troisième raccordement pour se raccorder à une conduite de retour (60) du circuit secondaire (52) et un quatrième raccordement (47) pour se raccorder à une conduite d'entrée (58) du circuit secondaire (52), et un filtre (25) logé dans ladite chambre interne (5) et intercalé entre une première zone (5a) de la chambre interne (5) communiquant avec le troisième raccordement (11) et une deuxième zone (5b) de la chambre interne (5) communiquant avec les deuxième et quatrième raccordements (10, 12),
**caractérisé en ce que** le premier raccordement (45) et le quatrième raccordement (47) sont raccordés entre eux par le biais d'un noeud (N) à l'extérieur de ladite chambre interne (5).

2. Séparateur selon la revendication 1, dans lequel le corps (2) comprend un premier manchon (9), un deuxième manchon (10), un troisième manchon (11) et un quatrième manchon (12) agencés deux par deux (9, 11) (10, 12) au niveau des côtés opposés du corps, les premier et troisième manchons (9, 11) communiquant avec la première zone (5a) de la chambre interne (5), les deuxième et quatrième manchons (10, 12) communiquant avec la deuxième zone (5b) de la chambre interne (5).

3. Séparateur selon la revendication 2, dans lequel le premier manchon (9) est fermé et le premier raccordement (45) est coaxial et mécaniquement raccordé au premier manchon (9).

4. Séparateur selon la revendication 3, dans lequel le premier manchon (9) est fermé par un joint borgne rotatif (46) auquel le premier raccordement (45) est mécaniquement raccordé.

5. Séparateur selon l'une quelconque des revendications 2 à 4, dans lequel le quatrième raccordement (47) est coaxial et raccordé, par voie hydraulique, au quatrième manchon (12).

6. Séparateur selon la revendication 5, dans lequel le quatrième raccordement (47) est raccordé au quatrième manchon (12) au moyen d'un joint débouchant rotatif (12).

7. Séparateur selon l'une quelconque des revendications précédentes, dans lequel le premier raccordement (45) et le quatrième raccordement (47) sont raccordés par un tuyau (49) à l'extérieur de la chambre interne (5) et formant ledit noeud (N) avec le quatrième raccordement (47).

8. Séparateur selon la revendication 7, dans lequel le premier raccordement (45), le quatrième raccordement (47) et le tube (49) sont assemblés, de manière solidaire, ensemble.

9. Séparateur selon l'une quelconque des revendications 2 à 8, dans lequel les deuxième et troisième manchons (10, 11) définissent ou sont raccordés aux deuxième et troisième raccordements respectivement.

10. Séparateur selon l'une quelconque des revendications précédentes, dans lequel le corps (2) est fermé au sommet par un couvercle (6) amovible.

11. Séparateur selon l'une quelconque des revendications ci-dessus, dans lequel le filtre (25) est en forme de panier et comprend une paroi latérale (26) réalisée avec un matériau filtrant.

12. Séparateur selon la revendication 11, dans lequel le filtre comprend une paroi inférieure (27), dans lequel une valve (35) normalement ouverte communique avec un conduit de purge (37) et est équipée avec un obturateur (40) configuré pour se fermer automatiquement lorsque le filtre (25) est retiré du corps (2).

13. Séparateur selon l'une quelconque des revendications précédentes, comprenant au moins un aimant (20) logé dans la première zone (5a) de la chambre interne (5) pour intercepter des particules magnétiques en suspension dans l'écoulement entrant depuis le troisième manchon (11).

14. Système thermique (50) équipé d'un circuit principal (51) et d'un circuit secondaire (52) ayant des conduites d'entrée (54, 58) respectives et des conduites de retour (56, 60) respectives et un séparateur hydraulique (1) selon l'une quelconque des revendications ci-dessus et ayant le premier raccordement (45) raccordé à la conduite de retour (56) du circuit principal (51), le deuxième raccordement raccordé à la conduite d'entrée du circuit principal (51), le troisième raccordement raccordé à la conduite de retour (60) du circuit secondaire (52) et le quatrième raccordement (47) raccordé à la conduite d'entrée (58) du circuit secondaire (52).

15. Système selon la revendication 14, dans lequel la conduite d'entrée (54) du circuit principal (42) est raccordée à la conduite d'entrée (58) du circuit secondaire (52) dans ledit noeud (N).
